(19) Europäisches Patentamt

European Patent Office

Office européen des brevets

(11) **EP 0 940 218 A2**

(12) **EUROPEAN PATENT APPLICATION**

(43) Date of publication:
08.09.1999 Bulletin 1999/36

(51) Int Cl.$^6$: **B23Q 9/00**

(21) Application number: 99104137.7

(22) Date of filing: 02.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 06.03.1998 SE 9800719

(71) Applicant: **Jonasson, Rune**
**802 51 Gävle (SE)**

(72) Inventor: **Jonasson, Rune**
**802 51 Gävle (SE)**

(74) Representative: **Johansson, Lars E.**
**Lars Johansson Patentbyra AB**
**P.O. Box 68**
**801 02 Gävle (SE)**

(54) **Implement for the guiding of portable circular saws**

(57)     An angle setting implement for the guiding of portable circular saws (12) comprises a ruler (2) that may be laid against a saw object (4), and a holder plate (3) having a straight edge (7), relative to which the saw and its blade (14) are linearly movable, and being articulatedly connected to the ruler in order to be pivotable between different angular setting positions, a tap (10) that is fixed relative to the ruler cooperating with an arched guiding curve (9) in the holder plate. The guiding curve (9) is non-circular and arranged to cooperate with a second guiding curve (18) of a linear form provided in the plate, into which second curve engages a second tap (19) that is fixed relative to the ruler, said second tap (19) being located at distance from the first-mentioned tap (10).

Fig 4

## Description

Technical Field of the Invention

This invention relates to an implement intended for the guiding of portable circular saws, which implement comprises a ruler that may be laid against an edge of a saw object, and a holder plate having a straight edge, relative to which the saw, and a rotatable saw blade included therein, are linearly movable, and being articulatedly connected to the ruler in order to be pivotable between different angular setting positions relative to the ruler, in order to make possible an adjustment of the saw blade into a desired angle against a marked point on the saw object, a tap that is fixed relative to the ruler cooperating with an arched guiding curve in the holder plate.

The implement is particularly suited for use in connection with the end crosscutting of boards and planks, not only at right angles, but also at other, variable ones.

Prior Art

An angle setting implement of the type generally presented above has been previously disclosed in SE 8403983-3. In this case, the holder plate, which has a set-square-like shape, is formed with a groove that accomodates the tap fixed on the ruler, said groove having a circular shape. More specifically, the groove has the shape of a circular sector with an arc length of 45°. The tap fixed relative to the ruler is shaped as a locking means, whose purpose is to lock the holder plate in a given position, after the desired cutting angle has been adjusted. According to the known implement, also a measurement stick is included which is axially movable and lockable relative to the ruler; the outermost, free end of the stick may be adjusted to a position that corresponds to the distance between the blade of the saw and a straight guiding edge on a support plate (also named table) surrounding it.

In practice, the known implement facilitates end crosscutting of boards and the like, primarily of large series under equal conditions, i.e., when a large number of boards are to be end-crosscut at one and the same angle. However, a disadvantage is that the distance between the straight guiding edge of the holder plate and the marked place or point on the saw object alters in dependence on the obliquity of the holder plate. Therefore, it is not possible to first mark out the desired length on the board and then apply the implement on it and adjust the implement into the desired cutting angle.

Objects and Characteristics of the Invention

The present invention aims at eliminating the above mentioned disadvantage of previously known angle setting implements and creating an improved implement. Therefore, a primary object of the invention is to provide an implement that makes possible a repositioning of the holder plate between different angle positions relative to the appurtenant ruler, without the distance between the straight guiding edge of the holder plate and the marked point on the saw object being altered. In other words, the implement shall make it possible to first mark the saw object longitudinally and then adjust the desired cutting angle, without having to move the implement in its entirety on the saw object.

According to the invention, the above mentioned object is attained by means of an implement that is characterized in that the arched guiding curve is non-circular and arranged to cooperate with a second guiding curve of a linear form provided in the plate, into which second curve engages a second tap that is fixed relative to the ruler, said second tap being located at distance from the first-mentioned tap. By this construction, it is guaranteed that a fictive, straight line that extends perpendicularly outwards from the straight guiding edge of the holder plate to a marked point on an edge of the saw object always maintains one and the same length independently of the angular position of the plate relative to the ruler.

Brief Description of the Drawings

On the attached schematic drawings:

Fig 1    is a perspective view showing an implement according to the invention applied to a saw object in the form of a board,

Fig 2    is an analogous perspective view showing how the implement cooperates with a portable circular saw,

Fig 3    is an enlarged planar view showing the holder plate adjusted perpendicularly to the appurtenant ruler, in and for achieving a saw cut that extends perpendicularly to the longitudinal extension of the board,

Fig 4    is an analogous planar view showing the holder plate adjusted to a restricted acute angle to the ruler,

Fig 5    is a planar view showing the plate adjusted to a somewhat larger acute angle to the ruler, and

Fig 6    is a further enlarged planar view illustrating the geometry of the implement according to the invention, which geometry is characteristic for the invention.

Detailed Description of a Preferred Embodiment of the Invention

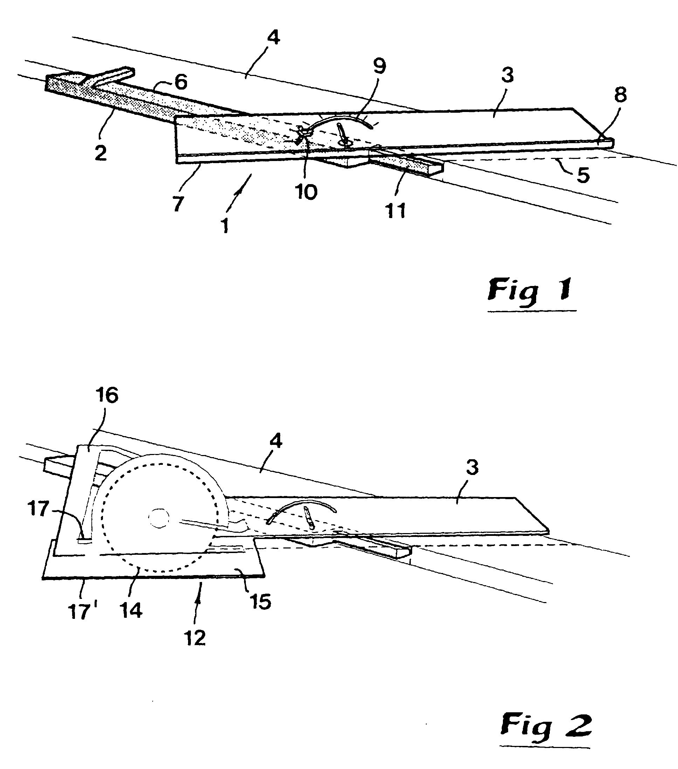

The implement shown in Fig 1 comprises a ruler 2 and a holder plate 3 that is articulatedly connected to said ruler. Generally, the ruler as well as the holder plate have a rectangular basic shape, although the ruler is considerably longer and narrower than the holder plate. In Fig 1, the implement is shown as applied to a saw object in the shape of a board 4 which is to be end-crosscut by means of a saw cut 5 as indicated by dashed lines. The ruler has a straight support edge 6 that may be laid against one of the longitudinal edges of the board 4. The holder plate 3 has an equally straight edge 7, along which a circular saw may be guided. In case the plate 3 is made with a restricted thickness, a bent-up material portion 8 of a larger height than the thickness of the plate, may be provided adjacent to the edge 7. In the holder plate 3 is provided an arched groove 9 that forms a guiding curve. Into this groove engages a tap designated 10, which is fixedly attached to the top side of the ruler 2. Advantageously, this tap 10 may simultaneously be formed as a locking means, by means of which the plate 3 may be fixed relative to the ruler into a desired angular position.

An extractable measurement stick 11 is also connected to the ruler 2. This stick is inserted into one of the ends of the ruler and may on one hand be displaced axially relative to the ruler, and on the other hand be locked in a suitable way relative to the latter.

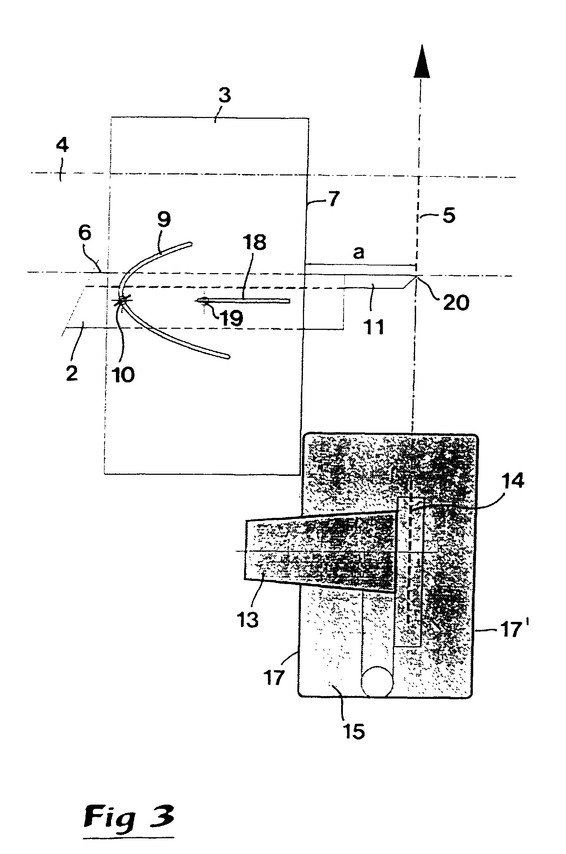

In Fig 2 is illustrated how a conventional portable circular saw 12 cooperates with the auxiliary implement 1. The saw comprises a blade 14 that is rotatable by means of an electric motor 13 (see also Fig 3), the bottom part of the blade 14 being accomodated into a slot in a lower support plate 15 which in practice is called table. The saw also comprises a handle 16. One of the two opposed, straight and inter-parallel longitudinal side edges 17, 17' of the table 15, namely the edge 17, serves as a guiding edge which may be laid against the straight guiding edge 7 of the holder plate 3.

As far as the shown implement has been described hitherto, it is substantially disclosed in SE 8403983-3.

Reference is now made to Fig 3 and subsequent drawing figures, which illustrate how the guiding curve forming groove 9 and the tap 10 in it, cooperate with a second groove 18 and a second tap 19 in it. The second groove 18 has a linear shape and extends perpendicularly to the guiding edge 7 of the plate 3. The second tap 19 is freely, reciprocally movable in the groove 18 when the plate 3 is moved relative to the ruler 2. It is also characteristic for the invention that the first guiding groove 9 has a non-circular arc or curve shape. More specifically, the groove has an ellipse-like shape.

In Fig 3, 20 designates a marked point or place for the saw cut 5 to-be in the board 4. In practice, this marked point may be a pencil dash, a notch or similar. By means of this marked point, the length of the board to be cut is determined. Starting off from the marked point, the saw cut 5 to-be may then be adjusted into different, desired angles relative to the longitudinal axis of the board.

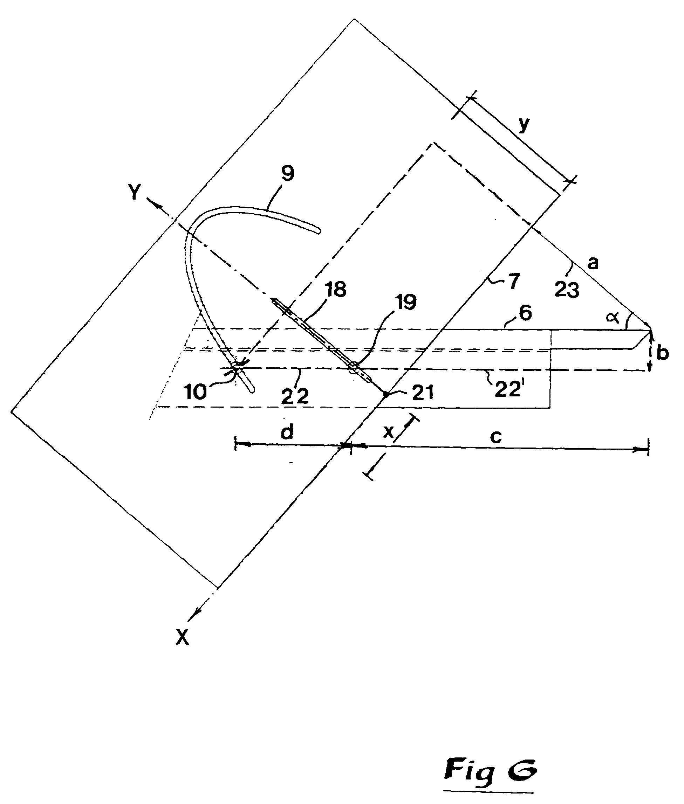

Reference is now made to Fig 6, which in more detail illustrates the geometry of the implement according to the invention. Into this drawing figure is introduced a two-dimensional coordinate system with dot-dashed x and y axes, of which the x axis extends along the guiding edge 7 of the holder plate 3, while the y axis extends centrally through the straight guiding groove 18, i.e., perpendicularly to the guiding edge 7, from an origo designated 21. Furthermore, in the figure "d" designates the length of an imaginary straight (dashed) line 22 between the taps 10, 19, or in other words, the distance between the taps. "c" designates the length of an extension 22' of the line 22 between on one hand the tap 19 and on the other hand the marked point 20. Thus, in other words, "c" designates the distance between the tap 19 and the marked point 20 in a plane that is parallel to the support edge 6 of the ruler, albeit distanced from it by a distance "b". "a" designates the length of an imaginary, straight line 23 that extends perpendicularly from the support edge 7 of the holder plate 3 to the marked point 20. This line 23 has the same length as the distance between the saw blade 14 and the guiding edge 17 of the table 15, which edge 17 may be laid against the support edge 7 of the holder plate 3. The purpose of the present invention is that said distance "a" always be constant, independently of the set angle of the holder plate 3 relative to the ruler. α designates a point angle of the right-angled triangle that is formed by the support edge 6, the guiding edge 7 and the line 23.

Although the approximately elliptical form of the guiding groove 9 originally had been derived empirically, it has afterwards been possible to observe that the shape of the groove is defined by the equation:

$$y = (c+d) \cdot \sqrt{1 - \frac{x^2}{d^2} - \frac{b'x}{d}} - a$$

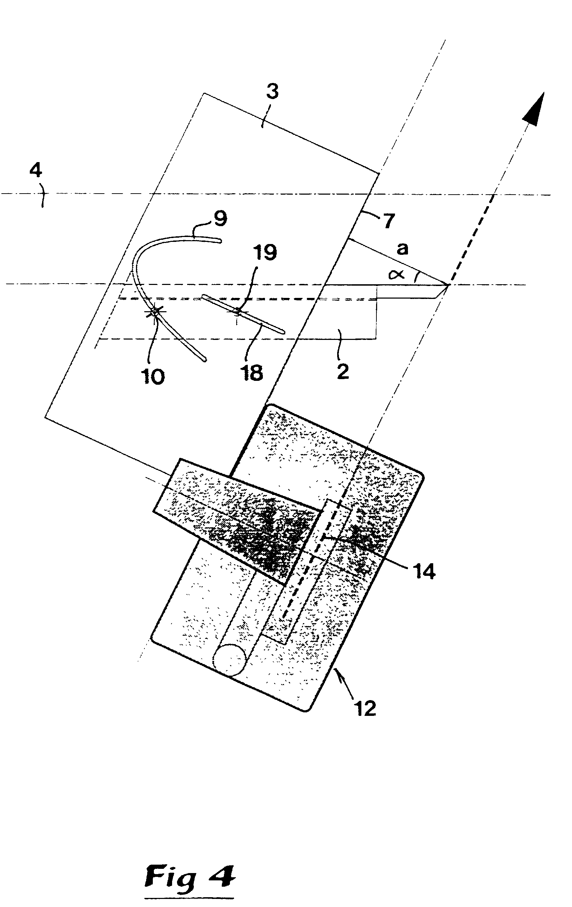

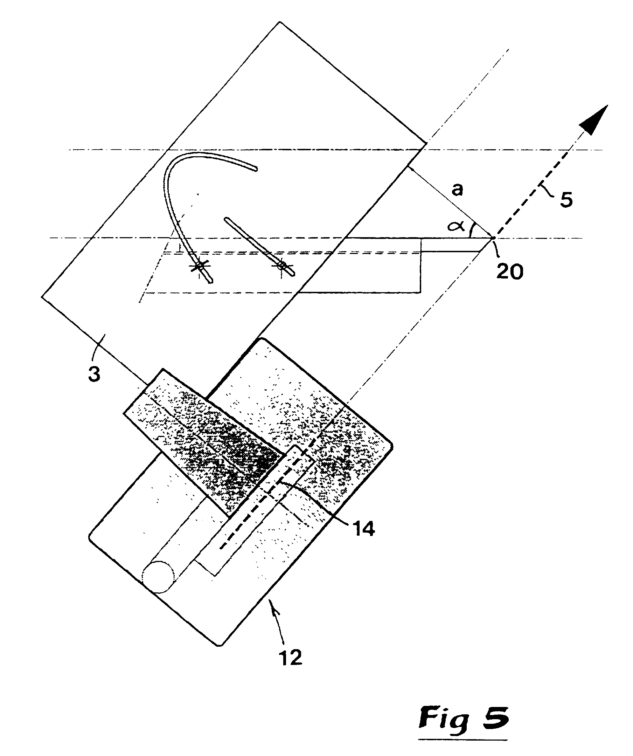

Reference is now made to Fig 3 to 5, that exemplify three different adjustment positions for the holder plate 3. In Fig 3 there is shown how the plate 3 is adjusted with the straight guiding edge at right angle to the ruler 2 and its support edge 6. As previously pointed out, the distance between the intended saw cut 5 and the support edqe 7 is designated "a". In Fig 4 is shown an adjustment position in which the plate 3 has been inclined at a moderate, acute angle $\alpha$ to the ruler and the board. More specifically, in this case the angle $\alpha$ is about 25°. In Fig 5, the angle $\alpha$ has been increased to about 40°. Already by an ocular comparison of the different adjustment positions according to Fig 3 to 5, one may see that the distance "a" is constant, independently of the angular setting of the holder plate relative to the ruler and the board; something that is also verified by the above presented mathematical relation. In practice this implies that the saw object may be marked with the desired cut length before an angular setting is made that is individual for each saw object. Therefore, the implement simplifies to a large extent the practical work when cutting singular saw objects or saw objects in small series.

## Claims

1.   An implement for the guiding of portable circular saws, comprising a ruler (2) that may be laid against an edge of a saw object (4), and a holder plate (3) having a straight edge (7), relative to which the saw (12), and a rotatable saw blade (14) included therein, are linearly movable, and being articulatedly connected to the ruler in order to be pivotable between different angular setting positions relative to the ruler, in order to make possible an adjustment of the saw blade into a desired angle against a marked point (20) on the saw object (4), a tap (10) that is fixed relative to the ruler cooperating with an arched guiding curve (9) in the holder plate (3), **characterized** in that said guiding curve (9) is non-circular and arranged to cooperate with a second guiding curve (18) of a linear form provided in the plate, into which second curve engages a second tap (19) that is fixed relative to the ruler (4), said second tap being located at distance from the first-mentioned tap (10).

2.   Implement according to claim 1, **characterized** in that the shape of the first arched guiding curve (a) is defined by the equation:

$$y = (c+d) \cdot \sqrt{1 - \frac{x^2}{d^2} - \frac{b'x}{d}} - a$$

wherein

y = the y coordinate position in a two-dimensional coordinate system whose x axis extends along the straight guiding edge (7) of the holder plate (3) and whose y axis extends through the straight second guiding curve (18),
x = the x coordinate position of the first tap (10) in the same coordinate system,
c = the distance between the second tap (19) and said marked point (20) on the saw object (4) along an imaginary straight line (22, 22') that is parallel to a support edge on the ruler, which edge may be laid against the saw object,
d = the distance between the two taps (10, 19),
a = the length of an imaginary line (23) that extends perpendicularly from the straight edge of the holder plate (3) to said marked point (20) on the saw object (4) and that is equally long as the distance between the saw blade (14) and a straight guiding edge (17) on a support plate (15) surrounding it, and
b = the perpendicular distance between the support edge (6) of the ruler (2) and an imaginary line (22, 22') through the two taps (10, 19).

*Fig 1*

*Fig 2*

**Fig 3**

**Fig 4**

**Fig 5**

EP 0 940 218 A2

Fig 6

9